# EUROPEAN PATENT APPLICATION

(11) **EP 4 297 457 A1**
(43) Date of publication of application: **27.12.2023**
(21) Application number: 22305897.5
(22) Date of filing: 21.06.2022
(51) Int. Cl.: H04W 12/30, H04W 12/40, H04W 8/20, H04W 8/26

(54) **A METHOD FOR SENDING DATA TO A USER EQUIPMENT COOPERATING WITH A SECURE ELEMENT AND CORRESPONDING SERVER**

(71) Applicant: THALES DIS FRANCE SAS, 92190 Meudon (FR)
(72) Inventor: BARBIER, Stéphane, 06370 Mouans-Sartoux (FR)
(74) Representative: Scheer, Luc

(57) **Abstract**

The present invention concerns a method for sending data to a user equipment (10) cooperating with a secure element, said method comprising:
- exchanging in signaling messages information between said secure element and a server (11) acting as an AUSF/UDM in order to transmit to said secure element a temporary IMSI, wherein in consist in using the procedure for steering of user equipment in VPLMN during registration as defined by 3GPP TS 33.501 V17.5.0 (2022-03) entitled "3^{rd} Generation Partnership Project, Technical Specification Group Services and System Aspects, Security architecture and procedures for 5G system (Release 17) in order to send from said server (11) to said secure element said data.

## Description

The present invention concerns telecommunications in cellular networks and more particularly the transmission of data to secure elements, preferably non-removable secure elements, like integrated UICCs (iUICCs) or embedded UICCs (eUICCs).

A secure element may be embodied in various form factors such as a smart card, a UICC, an embedded UICC or an integrated UICC.

The traditional smart card form factor is generally a physically removable (from a card reader) and that is in the form of e.g. a SIM card.

An embedded UICC is a non-removable secure element that is soldered on an electronic board comprised in such a terminal.

An integrated UICC is a non-removable secure element that has the particularity of being combined in a System-on-Chip (SoC).

The present invention proposes an enhanced initial mobile connectivity in 5G networks, in particular for 5G standalone networks.

It is known from EP-3 358 867 A1 and EP-3 358 868 A1 that are included in this description by reference a method of managing communication between a server and a user equipment. This method relates particularly to the establishment of a communication channel between a server and a user equipment devoid of full telecom credentials.

In order to securely connect to a telecommunication network, a user equipment needs to be provisioned with full telecom credentials (a profile) comprising a couple IMSI/Ki, where IMSI is a unique identifier of the telecom subscription and Ki a secret key uniquely allocated to the subscription by a mobile network operator.

The couple IMSI/Ki is usually stored in a tamper resistant element (also called secure element) which may be a SIM card, a Universal Integrated Circuit Card (UICC), an embedded secure element (e.g. eUICC), a software secure enclave or a secure element integrated (i.e. iUICC) within a System On Chip (SOC).

A tamper resistant element is considered as secure because it is able to control the access to the data it contains and to authorize or not the use of these data by other machines or entities. Tamper resistant elements may also provide computation services based on cryptographic components (a.k.a. crypto processor). In general, tamper resistant elements have limited computing resources and limited memory.

Due to manufacturing process, a user equipment (and its tamper resistant element) can be issued without a couple IMSI/Ki.

There is a need to securely establish a communication session between such a user equipment and a server intended to allow the user equipment to get in particular a couple IMSI/Ki.

The above-mentioned patent applications describe solutions to this problem.

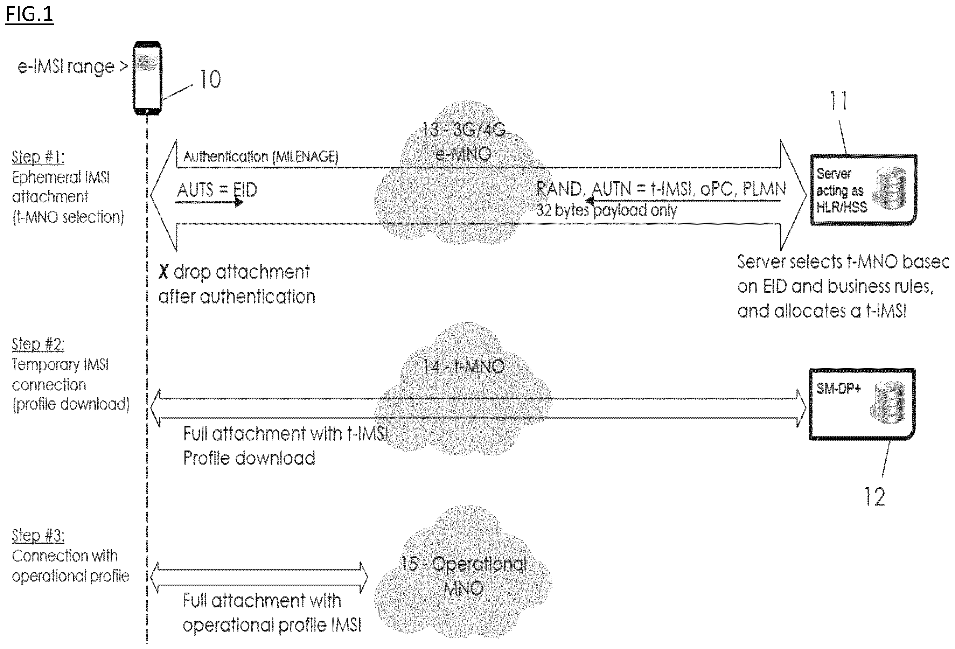

More precisely, the first one (EP-3 358 867 A1) describes a method of communication between a server and a user equipment through a set of command/response pairs. The user equipment uses an IMSI field of an Attach Request frame as defined by ETSI TS 124.008 to convey a command of one of these pairs to the server. The server uses an Authentication parameter RAND field or an Authentication parameter AUTN field of an Authentication Request frame as defined by ETSI TS 124.008 to convey a response corresponding to the received command. The server sends the Authentication Request frame in response to the Attach Request frame. Figure 1 represents such a process, completed by steps permitting the attachment of a user equipment to a network of a MNO (Mobile Network Operator).

In this figure, three entities are represented: A user equipment 10 cooperating with a secure element, a server 11 acting as a HLR/HSS and a SM-DP+ 12 (Subscription Manager Data Preparation).

The workflow is the following:
In a first step (step #1), the user equipment (or more precisely the secure element) selects an ephemeral IMSI, called e-IMSI, comprised in a range of e-IMSIs. The MCC/MNC (Mobile Country Code / Mobile Network Code) of the e-IMSI corresponds to the MCC/MNC of the server 11. The MSIN part of the e-IMSI is advantageously modulo the EID of the eUICC in order to avoid collisions between different devices that could use the same e-IMSI.

The EID (eUICC Identifier) is contained in a barcode printed on the box comprising the user equipment and is scanned by the vendor of the user equipment. The EID is transmitted in an AUTS message (Attach Request frame) to the ephemeral MNO (e-MNO) network 13 thanks to the e-IMSI. The e-MNO network 13 is typically a 3G, 4G or 5G NSA network (NSA stands for non- standalone, a 4G network core working with a 5G radio part). The authentication algorithm can be for example Milenage. The e-MNO 13 network is connected to the server 11 that returns in a RAND or AUTN message a temporary IMSI (t-IMSI), an oPC key (Operator key) and a PLMN (Private Land Mobile Network) list. The t-IMSI is chosen by the server 11 in view of the EID and business rules (and of the location of the user equipment 10).

In a second step (step #2), the user equipment 10 uses the received t-IMSI to connect to the network of a temporary MNO, t-MNO 14, connected to the SM-DP+ 12. The SM-DP+ 12 then donwloads a complete profile in the secure element of the user equipment 10.

In a third step (step #3), the user equipment 10 is able to connect to the network of an operational MNO 15, thanks to the profile downloaded during step #2.

At step 1, the eUICC attachs with the e-IMSI to the server 13 only for authentication purposes, i.e. for executing the Milenage algorithm. There are no phases like update location, no real attachment to the server 11, no data connexion, no possibility of sending SMS, no subscription at this stage.

During step 1 also, the transmitted PLMN list is function of the location of the user equipment. This list is defined in function of roaming agreements in order to use favorites MNOs.

For step 2, the secure element executes an IMSI switch for replacing e-IMSI by t-IMSI and a Refresh is executed in order to use t-IMSI instead of e-IMSI.

The problem of this solution is that, in scope of 5G SA networks (SA stands for standalone access), it is wished to send more data to the eUICC during step 1, for example (non-exhaustive list):
- enable 5G SUCI encryption: In 5G SA [networks, only unencrypted SUCI (null scheme) can be used for the initial connectivity at step 1. But some MNO may refuse usage of unencrypted SUCI. One purpose of the invention is to render possible to upload the data needed for SUCI encryption (home network public key, etc...);
- send the Ki to be used for the initial connectivity. Today the Ki is computed by using a secret in the eUICC, only the OPc is sent. Sending the Ki together with the oPC would remove the need to store this secret in the eUICC and improve the overall security of the solution;
- send an 'activation code' to the eUICC indicating the SM-DP+ 12 where to download the profile.

This problem is solved by using a standard protocol for sending from the server 11 to the eUICC these supplementary data.

More precisely, the invention proposes a method for sending data to a user equipment cooperating with a secure element, the method comprising exchanging in signaling messages information between the secure element and a server acting as an AUSF/UDM in order to transmit to the secure element a temporary IMSI, wherein in consist in using the procedure for steering of user equipment in VPLMN during registration as defined by 3GPP TS 33.501 V17.5.0 (2022-03) entitled "3rd Generation Partnership Project, Technical Specification Group Services and System Aspects, Security architecture and procedures for 5G system (Release 17) in order to send from the server to the secure element the data.

Preferably, the data are:
- information permitting to compute a 5G SUCI, or
- a Ki to be used for an initial connectivity, or
- an 'activation code' indicating a SM-DP+ where to download a profile.

The invention also concerns a server acting as an AUSF/UDM, the server being arranged for transmitting to a user equipment cooperating with a secure element a temporary IMSI, wherein the server also transmits to the secure element some data and uses the procedure for steering of user equipment in VPLMN during registration as defined by 3GPP TS 33.501 V17.5.0 (2022-03) entitled "3rd Generation Partnership Project, Technical Specification Group Services and System Aspects, Security architecture and procedures for 5G system (Release 17) in order to send from the server to the secure element the data.

The invention will be better understood by reading the following description of a preferred method according to the invention, in relationship with the figures that represent:
- Figure 1 the solution of the state of the art;
- Figure 2 the method according to the invention;
- Figure 3 represents a known procedure, called "Procedure for steering of UE in VPLMN during registration", as defined by 3GPP TS 33.501 V17.5.0 (2022-03) entitled "3rd Generation Partnership Project, Technical Specification Group Services and System Aspects, Security architecture and procedures for 5G system (Release 17)", figure 6.14.2.1-1.

Figure 1 has been described in view of the state of the art.

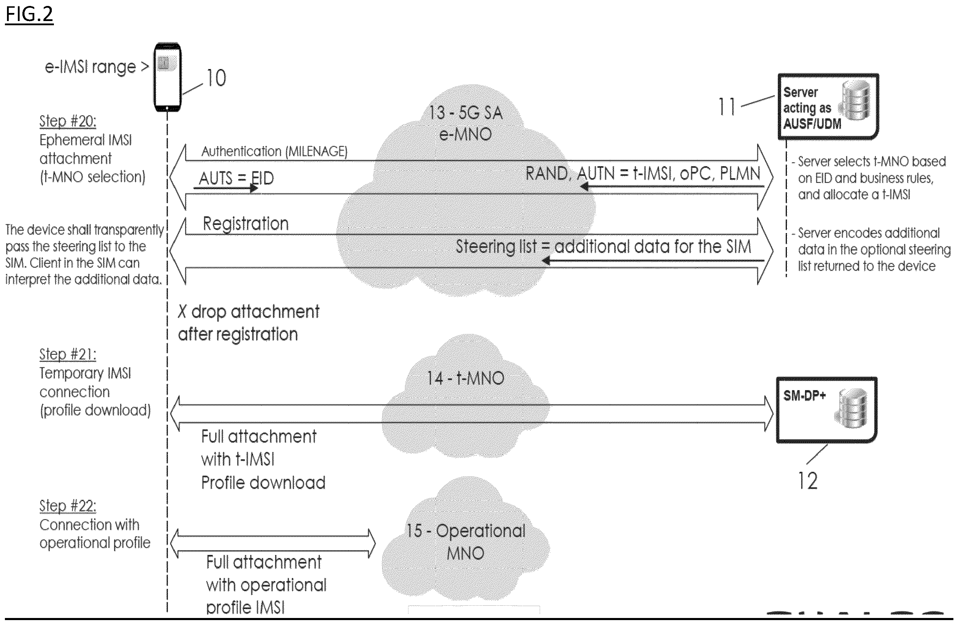

Figure 2 represents a preferred solution according to the invention.

In figure 2, the same entities as in figure 1 are represented. The difference is here that the e-MNO network is a 5G SA network.

The first exchanges of step 20 are identical to step 1 of figure 1 (allocation of a t-IMSI to the eUICC comprised in the user equipment 10 by the server 11). More precisely, the eUICC attaches to the network 13 with an ephemeral IMSI. The client 10 and server 11 exchange data thanks to specific values of RAND, AUTN, AUTS of the Milenage authentication algorithm. These steps are described in EP3358867A1 and EP3358868A1.

The server 11 is here acting as an AUSF/UDM since the protocol is working in 5G (an AUSF/UDM corresponds to a HSS of a 4G network).

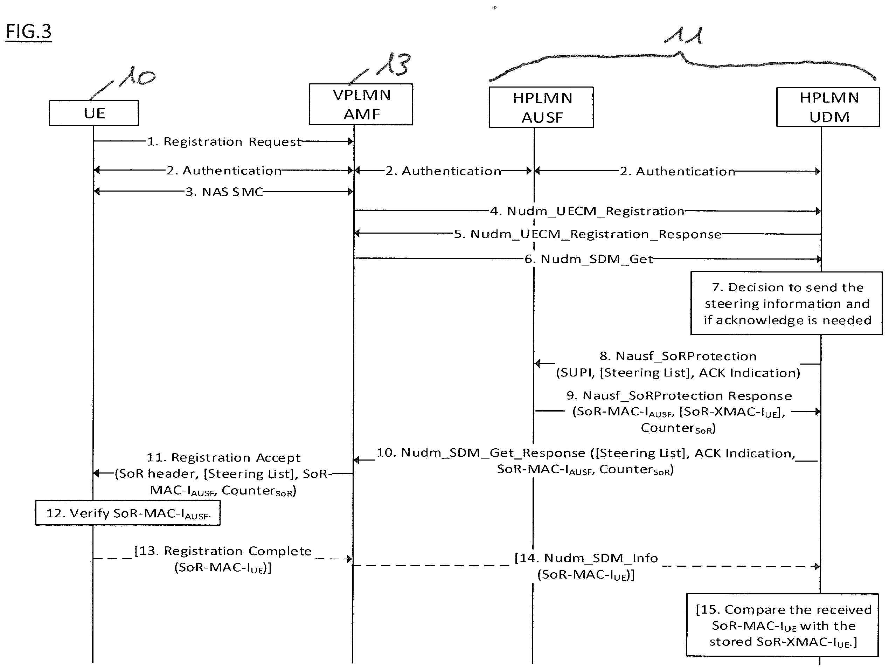

This corresponds to steps 1 and 2 of figure 3 that represents the procedure for steering of UE in VPLMN during registration, as defined by 3GPP TS 33.501 V17.5.0 (2022-03) entitled "3rd Generation Partnership Project, Technical Specification Group Services and System Aspects, Security architecture and procedures for 5G system (Release 17)". More precisely, it corresponds to figure 6.14.2.1-1 of this Technical Specification.

However, at step 20 of figure 2, the server 11 encodes additional data to be sent to the eUICC. This corresponds to steps 3 to 15 of figure 3. In this figure 3, a steering list is sent from the server 11 to the eUICC in a secured packet. But, in the scope of the invention, instead of sending a steering list, the server 11 sends in this secured packet other data to the eUICC. These other data are for example:
- information permitting to compute a 5G SUCI (like a key for SUCI encryption, a home network key for example): Without the invention, only unencrypted SUCI (i.e. a SUPI) can be used for the initial connectivity. But, as already said, some MNO may refuse usage of unencrypted SUCI. With the proposed solution, it is possible to upload the data needed for SUCI encryption (home network public key...);
- send the Ki to be used for the initial connectivity. Today the Ki is computed by using a secret in the eUICC, only the OPc is sent. Sending the Ki together with the oPC removes the need to store this secret in the eUICC and improves the overall security of the solution;
- send an 'activation code' indicating the SM-DP+ 12 where to download the profile.

After having sent these data to the eUICC, the eUICC is registered with the server 11 and the attachement is dropped.

So, the attachment procedure relies on the 3GPP standard attachment flow, but with a particular semantic to exchange specific data of limited size.

Steps 21 and 22 are identical to steps 2 and 3 of figure 1.

The invention takes profit of the 5G attachment procedure defined in the previous mentioned Technical Specification that includes an optional steering of roaming (SoR) phase right after authentication during which the home network AUSF/UDM can send a secured packet containing a PLMN list to the device, which in turn provides it to the eUICC transparently.

The invention thus consists in taking advantage of the SoR procedure to send the additional data: The server 11, acting as the AUSF/UDM, can send a secured packet containing those data instead of a PLMN list to the client of the eUICC, which can interpret and process those particular data.

In figure 3 that represents the "Procedure for steering of UE in VPLMN during registration", as defined by 3GPP TS 33.501 V17.5.0 (2022-03) entitled "3rd Generation Partnership Project, Technical Specification Group Services and System Aspects, Security architecture and procedures for 5G system (Release 17)", figure 6.14.2.1-1, the following elements are represented:
10 is the user equipment cooperating with the secure element, 13 is the visited PLMN (VPLMN) and 11 is the server acting as an AUSF/UDM.

These elements are not described further as they constitute state of the art.

The invention also consists in a server 11 acting as an AUSF/UDM, the server being arranged for transmitting to a secure element cooperating with a user equipment a temporary IMSI, the server also transmitting to the secure element some data and uses the procedure for steering of user equipment in VPLMN during registration as defined by 3GPP TS 33.501 V17.5.0 (2022-03) entitled "3rd Generation Partnership Project, Technical Specification Group Services and System Aspects, Security architecture and procedures for 5G system (Release 17) in order to send from the server to the secure element the data.

As already mentioned, these data are:
- information permitting to compute a 5G SUCI, or
- a Ki to be used for an initial connectivity, or
- an 'activation code' indicating a SM-DP+ where to download a profile.

## Claims

1. A method for sending data to a user equipment (10) cooperating with a secure element, said method comprising:
- exchanging in signaling messages information between said secure element and a server (11) acting as an AUSF/UDM in order to transmit to said secure element a temporary IMSI, wherein in consist in using the procedure for steering of user equipment in VPLMN during registration as defined by 3GPP TS 33.501 V17.5.0 (2022-03) entitled "3^{rd} Generation Partnership Project, Technical Specification Group Services and System Aspects, Security architecture and procedures for 5G system (Release 17) in order to send from said server (11) to said secure element said data.

2. A method according to claim 1, wherein said data are:
- information permitting to compute a 5G SUCI, or
- a Ki to be used for an initial connectivity, or
- an 'activation code' indicating a SM-DP+ where to download a profile.

3. A method according to claims 1 or 2 wherein said secure element is a eUICC.

4. A server (11) acting as an AUSF/UDM, said server being arranged for transmitting to a user equipment (10) cooperating with a secure element a temporary IMSI, wherein said server (11) also transmits to said secure element some data and uses the procedure for steering of user equipment in VPLMN during registration as defined by 3GPP TS 33.501 V17.5.0 (2022-03) entitled "3^{rd} Generation Partnership Project, Technical Specification Group Services and System Aspects, Security architecture and procedures for 5G system (Release 17) in order to send from said server to said secure element said data.

5. A server (11) according to claim 4 wherein said data are:
- information permitting to compute a 5G SUCI, or
- a Ki to be used for an initial connectivity, or
- an 'activation code' indicating a SM-DP+ where to download a profile.
